# EUROPEAN PATENT SPECIFICATION

(11) **EP 0 472 995 B1**
(45) Date of publication and mention of the grant of the patent: **13.07.1994**
(21) Application number: 91113544.0
(22) Date of filing: 13.08.1991
(51) Int. Cl.: B67D 1/04, B67D 1/12, B65B 31/00

(54) **Liquid aerating apparatus**
Vorrichtung zum Imprägnieren von Flüssigkeiten mit Gas
Dispositif de gazéification de liquide

(30) Priority: 17.08.1990 IL 95413
(43) Date of publication of application: 04.03.1992
(73) Proprietor: SODA CLUB HOLDINGS N.V., Curacao (AN)
(72) Inventor: Wiseburgh, Peter, Jerusalem (IL); Hulley, Peter, Acre Developments, Woodnewton, Peterborough (GB)
(74) Representative: Michelotti, Giuliano

(56) References cited:
- CH-A- 435 900
- US-A- 3 685 694

## Description

### Background of the invention

This invention relates to apparatus for aerating liquids, and in particular to portable machines for preparing aerated beverages. More especially, the invention concerns such machines intended for use in the home and adapted to be operated manually.

In aerating machines of the foregoing kind, a bottle containing the liquid to be aerated is loaded onto the machine and gas is introduced into the machine and passed through the liquid contained in the bottle. The bottle is subsequently removed, when the aerating has been completed.

The gas used for aerating is supplied from a cylinder fitted to the machine, which is replaced when it has become exhausted. A valve is provided to control the flow of gas from the cylinder, which, in the case of rechargeable cylinders, may form part of the cylinder, or in the case of disposable cylinders may form part of the machine. When the valve is operated, gas may pass into the machine and through the liquid, generating an internal pressure inside the machine and bottle, which is limited to a given maximum level by a pressure relief and safety valve. When the aerating process has been completed, the pressure inside the machine and bottle is reduced to atmospheric level by opening a valve.

When plastic bottles are used, undesired and often dangerous phenomena may occur. Thus, if the pressure relief and safety valves malfunction while the machine is being operated, gas pressure may continue to build up inside the bottle to the point where the bottle material yields and the bottle expands in a ductile way. The bottle expansion takes place on the outside diameter, this being the most highly stressed area. In prior art machines, this expansion may continue until the bottle surface engages the internal profile of the surrounding cavity and pressurization continues to take place until bottle or machine failure results. This often causes explosion of the bottle and injury to the user may result. Prior art machines are incapable of preventing or controlling such harmful phenomena.

Even if the valves operate perfectly and no malfunction occurs, a bottle may be defective or become defective because of abuse in use. Distortion of the body shoulder or base shape coupled with a change in material properties may then occur. This can result in failure of the bottle when subjected to stresses caused by internal pressurization. Prior art machines will permit distorted bottles to be loaded in the normal manner and pressurized.

U.S. Patent 3,658,694 discloses a disposable bottle for dispensing liquids, having inherently resilient, easily penetrable plastic walls and a capped mouth that is separately inserted into a rigid receptacle in which are mounted fixed bottle-piercing devices that also serve respectively as an outlet for the liquid contents of the bottle and as an inlet for propellant gas under pressure. No means are provided, however, for monitoring any defects in the shape or dimensions of the bottle or any change thereof during the pressurizing nor for preventing or discontinuing the pressurizing if such defects are present or occur. A defective bottle will be pressurized and, if it is unable to withstand the pressure, will explode.

It is a purpose of this invention to provide apparatus for preparing aerated beverages which provides complete safety even when plastic bottles are used. More specifically, it is a purpose of this invention to provide such an apparatus which will not permit a bottle to be pressurized if it is dimensionally defective and in particular if it does not have the correct profile and is, e.g., larger or smaller than it should be.

It is another purpose of this invention to provide such an apparatus which will prevent explosion of the bottle or failure of the apparatus itself if a bottle yields and expands during pressurization.

It is a further purpose of the invention to provide an apparatus of the kind described which will prevent undesired and/or unsafe discharge of gas.

It is a still further purpose of the invention to provide an apparatus of the kind described, the safety features of which are operative even while the user actuates the aerating controls.

Other purposes and advantages of the invention will become apparent as the description proceeds.

### Summary of the invention

The liquid aerating apparatus according to the invention comprises a reference surface for detecting any irregularity in the shape and/or dimensions of the bottle means for causing a bottle loaded on the apparatus to come into matching relationship with the reference surface, and means for preventing the build-up of pressure or releasing the pressure in the bottle, when in such a relationship with the reference surface, does not correspond or ceases to correspond to the position of a bottle having the correct shape and dimensions.
According to an aspect of the invention, said matching relationship is achieved through direct contact of the bottle with the reference surface.
In a preferred embodiment of the invention, the liquid aerating apparatus is provided with means for causing the bottle to come into contact with the reference surface, which comprise means for receiving the bottle in removable engagement, said bottle receiving means comprising means for allowing the engaged bottle to become displaced towards the reference surface and abut against the same by gravity.
Preferably, the means for allowing the engaged bottle to become displaced towards the reference surface and abut against the same by gravity comprise a pivot coupling between said bottle receiving means and support means rigid with the body of the apparatus, said receiving means being so structured that the cumulative centre of gravity of the bottle and the bottle receving means, when they are mutually engaged, is offset with respect to the centre of said pivot coupling whereby to cause the weight of the bottle to urge the same towards the reference surface.
In a further preferred embodiment of the invention, the apparatus comprises at least a valve for placing the bottle and the parts of the apparatus which communicate therewith in the pressurizing operation in communication with the atmosphere, when open, and means for causing said valve to be open when the axis of the bottle is not in the correct position.
In a preferred embodiment of the invention, the means for causing said valve to open comprise a plunger for displacing the valve closure element from its seat and cam means fixedly carried by the apparatus body and so shaped as to actuate said plunger when the bottle axis, and consequently the receiving means, are angularly displaced from the respective correct positions.
The minimum displacement angle that will cause the cam to actuate the plunger is in the order of a few degrees and the corresponding displacement of the point of contact of the plunger with the cam is in the order of a few millimeters.
Preferably said minimum displacement angle and said corresponding displacement of the point of contact of the plunger with the cam are smaller in the direction corresponding to bottle diameter smaller than standard than in the opposite direction.
In a preferred embodiment of the invention, the apparatus comprises two valves one of which operates as an exhaust valve to release pressure, even if the bottle is in its correct position, when the pressure has reached a threshold value and the aerating has been completed, while the other operates in like manner at a higher threshold value, to provide additional safety in case of malfunction of the first.
Preferably at least one of said valves and more preferably both valves are also cam-actuated to release pressure when the bottle is displaced from the correct position even if threshold pressure values have not been reached.
Further preferably, the cams and other parts of the apparatus are so structured that the said valve or valves will operate to discharge pressure and/or to prevent pressure from being built up when the bottle axis and the receiving means are displaced from the respective correct positions in either direction, whereby bottles that are too thin or have excessively thin contour portions will also not be pressurized.
In a further preferred embodiment of the invention, the apparatus comprises in combination with hand-operatable means for placing a gas cylinder, loaded onto it, in commuication with the inside of a bottle also loaded onto it, means for preventing said hand-operatable means form being actuated if the bottle axis and the bottle receiving means are displaced from the correct position by an amount insufficient to permit unloading the bottle form the apparatus but greater than the amount required to actuate the pressure releasing valves to release pressure.
Alternatively the liquid aerating apparatus according to the invention comprises about a body an aerating head having means for attaching thereto in gas tight sealing relationship a bottle containing liquid to be aerated and pivoted to said body a point vertically offset from the cumulative centre of gravity of said head and a filled bottle attached thereto, a reference surface attached to said body and so positioned that a bottle attached to said head will swing into contact with it by action of gravity, means in said body for receiving a gas cylinder provided with aerating valve means, means for actuating said aerating valve means, conduit means connecting said aerating valve means through said aerating head with the inside of the bottle, whereby to aerate the liquid contained therein when the aerating valve means are operated, gas venting means operative to discharge pressure from the bottle and the comunincating parts of the apparatus when the aeration has been completed, and valve means operative so to discarge pressure and to prevent formation of pressure when the bottle attached to the aerating head is not in a predetermined correct position corresponding to a correct shape and dimensions of the bottle.
Preferably, the apparatus according to the invention comprises cam means defined on the apparatus body and engaging plungers operative to cause opening of at least a valve means to release or preventing formation of pressure when the bottle attached to the aerating head is not in the correct position.
Further preferably, the apparatus comprises means for preventing the actuation of the aerating valve applied to the cylinder when the bottle attached to the aerating head is not in the correct position.
Preferably, said actuation preventing means do not cause interference of aerating valve actuating means with the operation of the safety valve.

Other preferred or optional features of the invention will become clear as the description proceeds. In any case, it should be understood that the apparatus may incorporate any additional safety and operating features already known in the art.

### Brief description of the drawings

The invention will be better understood from a description of a preferred embodiment thereof, with reference to the appended drawings, wherein:
- Fig. 1 is a vertical view of an apparatus according to an embodiment of the invention, parts of it being in cross-section;

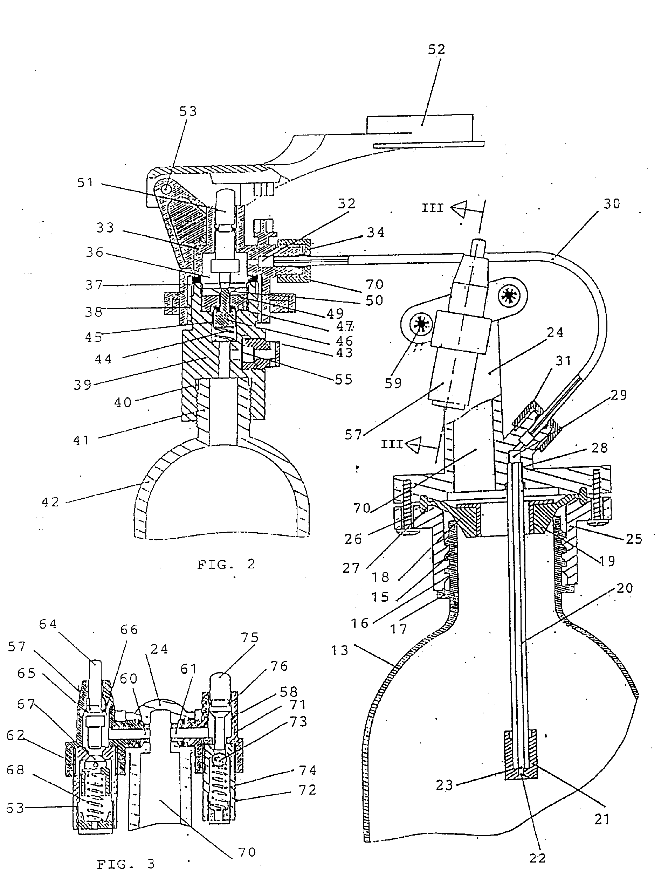

- Fig. 2 is a vertical cross-section at an enlarged scale of part of the apparatus of Fig. 1;
- Fig. 3 is a cross-section of a detail of Fig. 2, taken on the plane III-III of Fig. 2, looking in the direction of the arrows; and
- Fig. 4 (a), (b) and (c) is a schematic illustration, in vertical view with details shown at an enlarged scale, of how a pressure release valve, according to an embodiment of the invention, is actuated to release pressure or prevent formation thereof when the bottle, which is in the apparatus, is not in the correct position.

### Detailed description of an embodiment of the invention

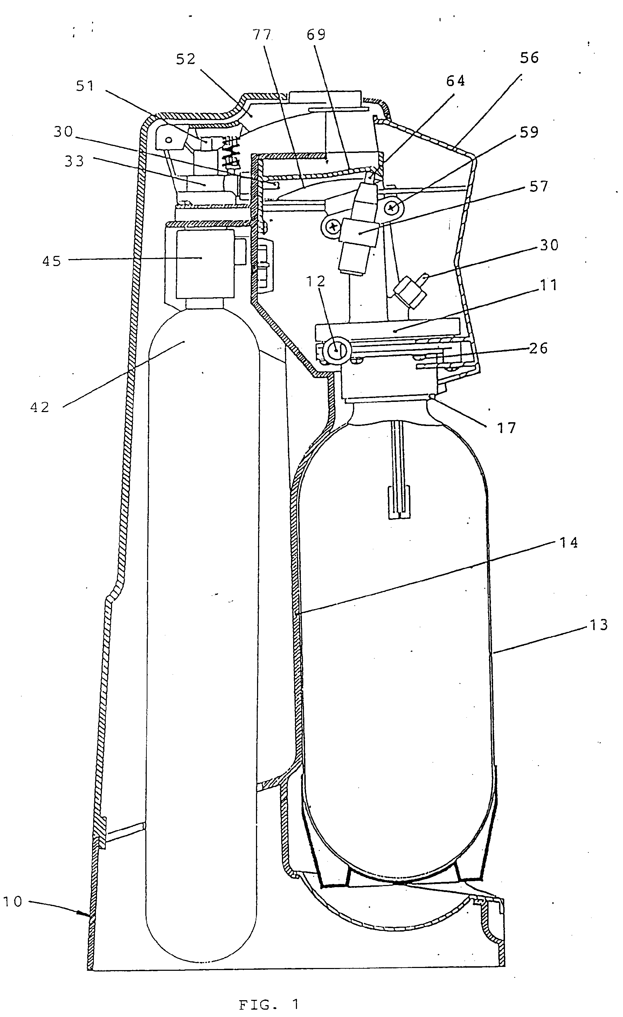

With reference now to the drawings, an apparatus according to an embodiment of the invention comprises a main body generally indicated at 10. Mounted on said body 10 is a bottle receiving means, viz. an aerating head assembly 11, hinged on the body at 12 so as to be capable of being swung outwards (in counter-clockwise direction, as seen in Fig. 1) for insertion of a bottle indicated at 13. Once a bottle is fitted on said head assembly and released, it will swing back under its own weight, rotating about hinge 12, until it comes into contact with a surface 14, hereinafter called "reference surface". This occurs because the center of gravity of the bottle and aerating assembly together is offset outwardly with respect to the pivot 12. If the profile of the bottle is not as it should be, only parts thereof, particularly the parts that jut outwardly with respect to the ideal profile, will contact the surface 14. Other, direct or indirect, means could be provided by skilled persons for comparing the profile of the bottle with that of the reference surface, which could be mounted in the apparatus in a different position and in a different way, and for detecting any discrepancies between them.

The bottle 13, containing liquid to be aerated, is engaged with said head 11 and is held in engagement with the same by means of an external thread 15 provided on the bottle which engages an internal thread 16 provided in the head 11, or other suitable means, a flange 17 or like means being provided on the neck of the bottle for limiting the distance by which the bottle 13 screws into the aerating head assembly 11. When fully screwed in, the open top end of the bottle 13 contacts an elastic gasket 18, preferably made of rubber and provided with a rigid stiffening sleeve 19, or like means, with sufficient pressure to create a gas and fluid tight seal. Of course, if the bottle 13 is not correctly fitted against the gasket 18, a fluid or gas tight seal will not be effected, and the bottle will not become pressurized.

The aerating head assembly 11 accommodates a tube 20 which extends through gasket 18, against which the mouth of the neck of the bottle 13 is engaged, and down inside the bottle 13. At its lower end the tube is threaded into a jet 21 which has a small bore 22 matching with the bore of said tube at 23.

The aerating head 11 comprises an upper part 24 and a lower part 25, which is connected to the upper part in any suitable way, e.g. by means of screws 26. A suitable sealing means, in this case a ring 27, which is part of the gasket 18, insures liquid and gas tight seal between the two parts of the aerating head 11.

The upper end of tube 20 is threaded at 28 into the upper part 24 of the aerating head 11 and communicates at its upper end with a passage or bore 29, which is connected to a flexible tube 30 by a connection 31, which ends in a bore 32 of a gas cylinder holder 33 and is held therein by a connector 34. Bore 32 in turn communicates with chamber 36 of cylinder holder 33.

Cylinder holder 33 is threaded internally at 37 to receive an externally threaded boss 38 of a valve body 39 which is screwed at 40 onto the neck 41 of a small gas cylinder 42. The valve body 39 is part of a valve assembly 45 which is fitted on each gas cylinder 42, so that a used gas cylinder can be removed together with its valve assembly from the cylinder holder 33 and a fully charged cylinder with its own valve assembly 45 can be fitted in its place.

The valve body 39 has a valve chamber 44 which houses a spring 43. The valve assembly 45 further comprises a valve pin 46 bonded to a gasket 47, which pin is urged by spring 43 against a seat formed at the lower end of an insert 49, which is provided with a bore through which a projection 50 of pin 46 passes.

The cylinder holder 33 is fitted with a plunger 51 which can be depressed by an external, manually operated, swingable, finger-actuated lever 52, pivoted at 53 on said cylinder holder. Depression of lever 52 causes plunger 51 to slide downwards and press downwards projection 50 of valve pin 46, against the reaction of spring 43, whereby to permit gas to pass from cylinder 42 through the bore of insert 49 and into chamber 36 of the cylinder holder, therefrom through flexible tube 30 and then into tube 20 which extends downward into the bottle 13 containing the liquid to be aerated. When the lever 52 is released, the spring 43 reasserts itself to urge the valve pin 46 upwards against its seat and close the valve 45, concurrently returning the plunger 51 upwards to its starting position. The valve body 39 may be provided with a subsidiary safety device, such as a blow out disk 55 which acts to release excess pressure in the gas cylinder 42.

The finger actuated lever 52 can be depressed when the aerating head 11 is in the vicinity of its fully swung downwards position, which is the aerating position. This is because the aerating head 11 is solid with a plate 56 which, as seen in Fig. 1, prohibits depression of lever 52 when it is swung away from the aerating position by an angle greater than a predetermined tolerance angle, as will be explained hereinafter, whereby to prevent undesirable or unsafe discharge of gas.

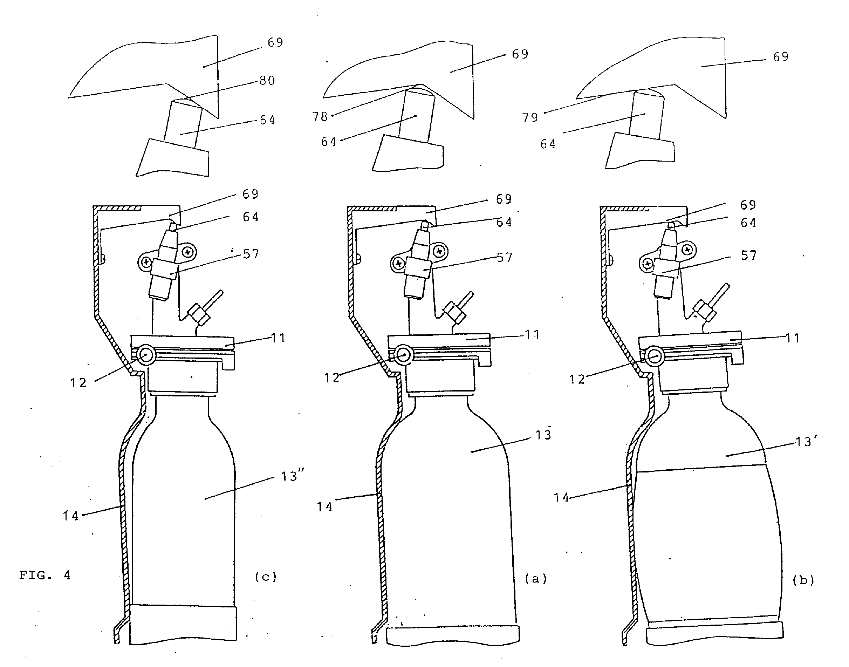

The aerating head assembly 11 comprises an upper aerating head 24, fitted with a pressure release valve carrier assembly 57 and a safety valve carrier assembly 58, both fastened to the upper aerating head 24 by screws 59 and more particularly seen in Fig. 3. The inner chamber 70 of the upper aerating head 24 communicates with exhaust valve carrier assembly 57 by means of a bore 60 and with safety valve carrier assembly 58 by means of a bore 61.

The exhaust valve carrier assembly 57 comprises an exhaust valve carrier body 62, fitted with an exhaust valve 63, and a plunger 64 with a ring 65, which seals at 66 against the exhaust valve carrier body 62 when internal pressure is applied. In the absence of pressure, plunger 64 falls back due to gravity until its lower end rests lightly on a poppet 67 of the valve, which is forced against a seat by a spring 68. When pressure is applied to the system with the aerating head in its correct position, plunger 64 is urged upwards until a gas tight seal is made by ring 65 seating 66. When the pressure in the system has reached a predetermined threshoid value, e. g. 105 psi, and the aerating has been completed, spring 68 will yield and the gas will be vented to the atmosphere.

Further, independently of the degree of pressure in the bottle, when the aerating head is swung away from its correct position, plunger 64 will be depressed by cam 69 and will push ring 65 off its seat, thereby allowing pressure to escape, as gas from chamber 70 passes through the clearance between the plunger and the bore of the valve body 62. How this occurs, is schematically illustrated in Fig. 4, the cam and the plunger being also shown therein as a detail at an enlarged scale. Fig. 4 (a) shows a bottle 13 having the correct, standard profile, which bottle therefore is in its correct position, when loaded in the apparatus. In this case, the plunger 64 of exhaust valve assembly 57 is close to a zone 78 of cam 69, which represents a recess in the cam profile, a slight gap remaining therebetween, so that the plunger is in its uppermost position, poppet 67 engages its seat and the exhaust valve is closed (of course, if the pressure is below its threshold value). If a bottle 13' has swollen under pressure or had from the start a diameter in excess of the correct value at any point of its contour, as in Fig. 4 (b), the bottle will be shifted (in a counterclockwise direction, looking at the drawings) from its correct position. The point of contact of plunger 64 with cam 69 will have shifted, as shown in Fig. 4 (b), to the left looking at the drawing, and will now be on surface 79 of the cam, which is slanted outwards with respect to zone 78, whereby plunger 64 will have been depressed, displacing ring 65 off its seating face at 66 to release pressure. The same depression of the plunger will occur if the bottle has a diameter which is below the correct, standard value, as shown in Fig. 4 (c). The point of contact of plunger 64 with cam 69 will now be in portion 80 of the cam arc, to the right (looking at the drawing) of zone 78 . Portion 80 is more sharply slanted outwards than portion 79, so that a smaller angular displacement of the aerating head and a smaller linear displacement of the point of contact of the plunger with the cam will now suffice to actuate the ring 65 from its seating face 66 to release pressure. Plunger 75 of safety valve 72 will cooperate in a similar manner with cam 77.

The actuation of the exhaust valve in the situation of Fig. 4 (b) will occur when the plunger 64 has travelled a few millimeters, preferably not more than 3 mm and still more preferably about 1.7 mm, along portion 78 of the cam arc. In the embodiment described, the initial distance of the pivot 12 from the vertex of zone 78 of cam 69 is 87 mm, and a linear displacement of the plunger of 3 mm corresponds to a displacement angle of about 2°. This figure indicates the order of magnitude of the angular displacement which actuates plunger 64 and therefore of the sensitivity of the safety device represented by ring 65 and its seating 66. Of course, the displacement angle may change depending on the dimensions of the device, and e. g. on the distance of the displacement pivot, such as 12, from the correct contact point of plunger and cam (which is the radius of the angular displacement), on the distance from said pivot to the zones of the bottle where an expansion may take place and on the extent to which such an expansion may be tolerated. The minimum linear displacement of the plunger, with respect to the pivot, that will displace ring 65 off its seat 66, as described, can also change depending on the various dimensions mentioned, but it can be easily determined by a skilled person in each particular instance, based on the typical values indicated herein.

The punger 64 will be actuated in the same way, to displace ring 65 from its seat, if a bottle the diameter of which is greater than the correct one at any point of its contour is loaded on the machine. The aerating head will be angularly displaced from its correct position, because of the excess diameter, exactly as if a bottle having the right size and shape had been loaded and had expanded as a result of pressurization, and plunger 64 will be displaced in the same manner along cam 69 and be depressed thereby, thus displacing ring 65 from its seat. The same values of linear and angular displacements, set forth hereinbefore for the case of an expanded bottle, will apply to this case.

On the other hand, if the bottle diameter is below it correct value, the situation which is created is that of Fig, 4 (c) and the minimum displacement which causes displacement of ring 65 from its seat to release pressure will be in the same order of magnitude, but preferably smaller, e. g. by about one third, than that which causes such actuation in the case of Fig. 4 (b). E. g. its minimum value should preferably be not greater than 2 mm and still more preferably should be about 1 mm.

Considering now the aerating of a bottle of correct dimensions, pressure is released once the aerating has been completed and the pressure threshold has been reached, and then the bottle is swung with the aerating head in the direction required to unload the bottle - counterclockwise, as seen in the drawings. This swinging of the aerating head continues beyond the angle which actuates valve 63, and at that time, and before a position is reached in which it is possible to remove the bottle from the apparatus, the plunger 64 will be pushed down by cam 69 and will displace poppet 67 from its seat. This will not normally vent any pressure, as pressure should normally have been released already, but provides an additional safety in case of any malfunction that might have caused any pressure to remain in the system. Further, in the case that the poppet had become stuck to its seat, due to the machine's not having been used for some time or for any other cause, it will be freed when the plunger 64 is depressed by the cam 69 as the aerating head is swung forward for the purpose of inserting a bottle, and this will guarantee that the valve operates properly when the system is pressurized.

The safety valve assembly 58 comprises safety valve carrier body 71 fitted with a safety, pressure release valve 72 which comprises a valve ball 73 and a spring 74 urging the ball 73 against its seat. In the body 71 a plunger 75, provided with a rubber ring 76, is slidably mounted. When a predetermined threshold pressure, marginally higher than the threshold pressure of the exhuast valve, e. g. 130 psi, has been reached because the exhaust valve has not released it for any reason, spring 74 will yield, valve ball 73 will be displaced from its seat, and pressure be released from the bottle through chamber 70 and bore 61 to the atmosphere. The safety valve 72 will also be actuated whenever the aerating head assembly is swung forwards (counterclockwise in the drawings) in a manner similar to that of the exhaust valve, as already noted, because plunger 75 will bear against cam 77 and be depressed by it, thus displacing ball 73 off its seat. However the profile of cam 77 and its relationship to plunger 75 are such that the displacement angle required so to actuate the safety valve 72 is larger than that required to actuate exhaust valve 63, though smaller than that required to unload the bottle from the apparatus. The aforesaid action of plunger 75 on ball 73 will also occur when the aerating head is swung forwards for inserting a bottle and will thus guarantee proper functioning of the valve during the aerating procedure and thereafter, even if the ball 73 should have become stuck to its seat because of lack of use of the machine or for any other reason.

The reference surface 14 is so formed that when a bottle having the correct shape and size and correctly screwed onto the aerating head 11 rests against it, cams 69 and 77 will not actuate plungers 64 and 75 and the release and safety valves will not be opened by them. The inside of the bottle and the parts of the apparatus in communication with it will be sealed off from the atmosphere and actuation of the lever 52 will cause gas to pass from the cylinder 42 to the bottle, until the predetermined maximum pressure has been reached.

It is appreciated that it is the engagement of the bottle surface with the reference surface 14 which determines the position of the bottle axis, and since this is necessarily aligned with the axis of the aerating head, determines the position of the aerating head. The "correct positions" of both are those which they assume when a bottle having the correct shape and size has come into contact with reference surface 14. However, there is a certain tolerance in the bottle's shapes and sizes, and therefore minor departures from the theoretical position, corresponding to an ideal perfect bottle, are tolerated, so that the expression "correct position" should be understood as including all positions differing from the ideal one by a tolerated amount. The tolerated amount is expressed by an angular tolerance, viz. by the angle by which the bottle and the aerating head must be displaced from the ideal position to cause the cams 69 and 77 to actuate the venting and safety valves, and thus to prevent pressurization of a defective bottle or to interrupt the pressurization of a bottle which has expanded beyond the tolerated amount, as set forth hereinbefore.

Obviously, when the liquid in the bottle has been completely aerated and the bottle is swung upwards in order to remove it from the apparatus, the swinging motion will bring plungers 64 and 75 into engagement with cams 69 and 77 and the pressure in the bottle and the apparatus will be released. Concurrently plate 56 reaches a position in which it prevents lever 52 from being depressed and thus prohibits release of gas into the apparatus. However the angle by which the aerating head must be swung away from its correct position for plate 56 completely to prevent depression of lever 52, is substantially larger than the angle by which it must be swung for cam 69 to actuate plunger 64, e.g. it should be no less than 5°. Therefore the plungers and their valves can be actuated, as a result e.g. of a swelling of the bottle, even though lever 52 is still being depressed to effect pressurization. This is important, because the person operating the apparatus will generally not be aware that the bottle is swelling during the aerating process and will keep depressing the lever 52, and if this latter should engage plate 56 at too small an angle from the correct position of the aerating head, the mechanical functions which produce release of the pressure, as hereinbefore described, would be impeded.

## Claims

1. Apparatus for aerating liquids contained in bottles, comprising a reference surface (14) for detecting any irregularity in the shape and/or dimensions of the bottle, means (12) for causing a bottle loaded on the apparatus to come into matching relationship with the reference surface, and means (69, 64) for preventing the build-up of pressure or releasing the pressure in the bottle, if the position of the bottle, when in such a relationship with the reference surface, does not correspond or ceases to correspond to the position of a bottle having the correct shape and dimensions.

2. Apparatus according to claim 1, wherein said matching relationship is achieved through direct contact of the bottle with the reference surface.

3. Apparatus according to claim 1, comprising means for causing the bottle to come into contact with the reference surface, which comprise means (11) for receiving the bottle in removable engagement, said bottle receiving means comprising means (12) for allowing the engaged bottle to become displaced towards the reference surface and abut against the same by gravity.

4. Apparatus according to claim 3, wherein the means for allowing the engaged bottle to become displaced towards the reference surface and abut against the same by gravity comprise a pivot coupling (12) between said bottle receiving means (11) and support means rigid with the body (10) of the apparatus, said receiving means (11) being so structured that the cumulative centre of gravity of the bottle and the bottle receiving means, when they are mutually engaged, is offset with respect to the centre of said pivot coupling (12), whereby to cause the weight of the bottle to urge the same towards the reference surface (14).

5. Apparatus according to claim 1, comprising at least a valve (65, 66) for placing the bottle and the parts of the apparatus which communicate therewith in the pressurizing operation in communication with the atmosphere, when open, and means (69, 64) for causing said valve to be open when the axis of the bottle is not in the correct position.

6. Apparatus according to claim 5, wherein the means for causing said valve to open comprise a plunger (64) for displacing the valve closure element (65) from its seat and cam means (69) fixedly carried by the apparatus body and so shaped as to actuate said plunger when the bottle axis, and consequently the receiving means, are angularly displaced from the respective correct positions.

7. Apparatus according to claim 6, wherein the minimum displacement angle that will cause the cam (69) to actuate the plunger (64) is in the order of a few degrees and the corresponding displacement of the point of contact of the plunger with the cam is in the order of a few millimeters.

8. Apparatus according to claim 7, wherein said minimum displacement angle and said corresponding displacement of the point of contact of the plunger with the cam are smaller in the direction corresponding to bottle diameter smaller than standard than in the opposite direction.

9. Apparatus according to claim 1, comprising two valves (63) and (72), one of which operates as an exhaust valve to release pressure, even if the bottle is in its correct position, when the pressure has reached a threshold value and the aerating has been completed, while the other operates in like manner at a higher threshold value, to provide additional safety in case of malfunction of the first.

10. Apparatus according to claim 9, wherein at least one of said valves and preferably both valves are also cam-actuated to release pressure when the bottle is displaced from the correct position even if threshold pressure values have not been reached.

11. Apparatus according to claim 10, wherein the cams (69, 77) and other parts of the apparatus are so structured that the said valve or valves will operate to discharge pressure and/or to prevent pressure from being built up when the bottle axis and the receiving means are displaced from the respective correct positions in either direction, whereby bottles that are too thin or have excessively thin contour portions will also not be pressurized.

12. Apparatus according to claim 5, comprising, in combination with hand-operatable means (52) for placing a gas cylinder, loaded onto it, in communication with the inside of a bottle also loaded onto it, means (56) for preventing said hand-operatable means from being actuated if the bottle axis and the bottle receiving means are displaced from the correct position by an amount insufficient to permit unloading the bottle from the apparatus but greater than the amount required to actuate the pressure releasing valves to release pressure.

13. Apparatus according to claim 1, comprising a body (10), an aerating head (11) having means for attaching thereto in gas tight sealing relationship a bottle containing liquid to be aerated and pivoted to said body about a point (12) vertically offset from the cumulative centre of gravity of said head and a filled bottle attached thereto, a reference surface (14) attached to said body and so positioned that a bottle attached to said head will swing into contact with it by action of gravity, means (33, 37) in said body for receiving a gas cylinder provided with aerating valve means (45), means (51, 52) for actuating said aerating valve means, conduit means (20, 30) connecting said aerating valve means through said aerating head with the inside of the bottle, whereby to aerate the liquid contained therein when the aerating valve means are operated, gas venting means (63) operative to discharge pressure from the bottle and the comunicating parts of the apparatus when the aeration has been completed, and valve means (65, 66) operative so to discharge pressure and to prevent formation of pressure when the bottle attached to the aerating head is not in a predetermined correct position corresponding to a correct shape and dimensions of the bottle.

14. Apparatus according to claim 13, comprising cam means (69, 77) defined on the apparatus body and engaging plungers (64, 75) operative to cause opening of at least a valve means to release or preventing formation of pressure when the bottle attached to the aerating head is not in the correct position.

15. Apparatus according to claim 13, comprising means (56) for preventing the actuation of the aerating valve applied to the cylinder when the bottle attached to the aerating head is not in the correct position.

16. Apparatus according to claim 15, wherein said actuation preventing means do not cause interference of aerating valve actuating means with the operation of the safety valve.

## Patentansprüche

1. Vorrichtung zum Versetzen einer in Flaschen befindlichen Flüssigkeit mit Kohlensäure, wobei die Vorrichtung zum Feststellen jeder Unregelmäßigkeit der Form und/oder der Abmessungen der Flasche eine Bezugsfläche (14) aufweist sowie eine Einrichtung, die eine in die Vorrichtung eingesetzte Flasche dazu bringt, sich an die Bezugsfläche anzupassen und schließlich mit Vorrichtungen (69, 64), mit deren Hilfe der Aufbau oder das Nachlassen eines Druckes in der Flasche dann verhindert werden soll, wenn die Stellung der Flasche, die zu der Bezugsfläche in einer solchen Beziehung steht, nicht oder nicht mehr der Stellung einer Flasche entspricht, die eine korrekte Form und korrekte Abmessungen hat.

2. Vorrichtung nach Anspruch 1, wobei die zusammenpassende Beziehung durch direkte Berührung der Flasche mit der Bezugsfläche erzielt wird.

3. Vorrichtung nach Anspruch 1, mit einer Einrichtung, die die Flasche dazu bringt, mit der Bezugsfläche in Berührung zu kommen und die eine Vorrichtung (11) zum lösbaren Aufnehmen der Flasche aufweist, die ihrerseits eine weitere Vorrichtung aufweist, die es der aufgenommenen Flasche ermöglicht, in Richtung auf die Bezugsfläche verschoben zu werden und an diese mit Hilfe der Schwerkraft anzustoßen.

4. Vorrichtung nach Anspruch 3, wobei die Vorrichtung, die es der ergriffenen Flasche ermöglicht, in Richtung auf die Bezugsfläche verschoben zu werden und gegen diese mit Hilfe der Schwerkraft anzustoßen, eine Schwenkverbindung (12) zwischen der Flaschenaufnahmevorrichtung (11) und der Stützvorrichtung umfaßt, die starr am Gehäuse (10) der Vorrichtung angebracht ist, wobei die Flaschenaufnahmevorrichtung (11) so aufgebaut ist, daß der zusammengefaßte Schwerkraft-Mittelpunkt der Flasche und der Flaschenaufnahmevorrichtung dann, wenn sie gegenseitig im Eingriff sind, in bezug auf den Mittelpunkt der Schwenkverbindung (12) versetzt ist, wodurch das Gewicht der Flasche dieselbe in Richtung auf die Bezugsfläche (14) drückt.

5. Vorrichtung nach Anspruch 1 mit wenigstens einem Ventil (65, 66), mit dessen Hilfe die Flasche und diejenigen Teile der Vorrichtung, die mit ihr in Verbindung stehen, während des Druckvorganges dann, wenn es offen ist, mit der Atmosphäre in Verbindung zu setzen ist sowie mit einer Vorrichtung (69, 64), die das Ventil in eine offene Stellung bewegt, wenn die Achse der Flasche sich nicht in einer korrekten Lage befindet.

6. Vorrichtung nach Anspruch 5, wobei die Vorrichtung, die das Ventil dazu bringt, sich zu öffnen, einen Plunger (64) aufweist, mit dessen Hilfe ein Ventilschließelement (65) von seinem Sitz verschoben wird sowie eine Kurveneinrichtung (69), die durch das Gehäuse der Vorrichtung feststehend abgestützt wird und die so geformt ist, daß sie den Plunger dann betätigt, wenn die Achse der Flasche und demzufolge auch die Aufnahmevorrichtung von der jeweiligen korrekten Stellung winkelmäßig abweicht.

7. Vorrichtung nach Anspruch 6, wobei der minimale Verschiebungswinkel, bei dem die Kurveneinrichtung (69) den Plunger (64) betätigt, in der Größenordnung von wenigen Graden liegt und die entsprechende Verschiebung des Berührungspunktes des Plungers mit der Kurveneinrichtung in der Größenordnung von wenigen Millimetern.

8. Vorrichtung nach Anspruch 7, wobei der minimale Verschiebungswinkel und die entsprechende Verschiebung des Berührungspunktes des Plungers mit der Kurveneinrichtung in derjenigen Richtung kleiner ist, die dem Flaschendurchmesser entspricht, wenn er kleiner ist als die Norm, als in der entgegengesetzten Richtung.

9. Vorrichtung nach Anspruch 1, mit zwei Ventilen (63, 72), von denen eines als Auslaßventil zum Ablassen des Druckes selbst dann wirkt, wenn die Flasche in ihrer korrekten Stellung ist, wenn der Druck jedoch einen Schwellenwert erreicht hat und wenn das Zuführen von Luft bzw. Kohlensäure beendet ist, während das andere Ventil in ähnlicher Weise bei einem höheren Schwellenwert wirkt, um im Fall der Fehlfunktion des ersten Ventiles eine zusätzliche Sicherheit zu bieten.

10. Vorrichtung nach Anspruch 9, wobei wenigstens eines der Ventile und vorzugsweise beide auch nockenbetätigt sind, um den Druck dann abzulassen, wenn die Flasche aus ihrer korrekten Stellung verschoben wird und zwar selbst dann, wenn der Schwellenwert des Druckes noch nicht erreicht worden ist.

11. Vorrichtung nach Anspruch 10, wobei die Kurveneinrichtungen (69, 77) und andere Teile der Vorrichtung so aufgebaut sind, daß das Ventil oder die Ventile so wirken, daß sie den Druck ablassen und/oder verhindern, daß ein Druck aufgebaut wird, wenn die Flaschenachse und die Aufnahmevorrichtung aus ihrer jeweiligen korrekten Stellung in irgendeine Richtung verschoben werden, wobei die Flaschen, die zu dünn sind, oder die besonders dünne Umfangsteile haben, nicht unter Druck gesetzt werden.

12. Vorrichtung nach Anspruch 5, die in Kombination mit einer von Hand betätigbaren Vorrichtung (52) zum Inverbindungbringen eines an ihre befestigten Glaszylinders mit dem Inneren einer Flasche, die ebenfalls an ihr angebracht ist, eine Vorrichtung (56) aufweist, mit deren Hilfe die handbetätigte Vorrichtung daran gehindert wird, dann betätigt zu werden, wenn die Flaschenachse und die Flaschen-Aufnahmevorrichtung um eine Strecke aus der korrekten Stellung verschoben sind, die nicht dazu ausreicht, das Abnehmen der Flasche aus der Vorrichtung zu ermöglichen, die aber größer ist, als die Strecke, die zum Betätigen der Druckablaßventile benötigt würde, um den Druck abzulassen.

13. Vorrichtung nach Anspruch 1 mit einem Gehäuse (10), einem Druckeinlaßkopf, der seinerseits eine Flaschenaufnahmevorrichtung (11) aufweist, an die gasdicht eine Flasche angeschlossen werden kann, die eine Flüssigkeit enthält, die mit Kohlensäure versetzt werden soll und die am Gehäuse an einem Punkt (12) verschwenkbar angelenkt ist, der vom gemeinsamen Schwerpunktszentrum des Kopfes und der daran angebrachten Flasche vertikal versetzt ist, einer Bezugsfläche (14), die am Gehäuse angeordnet und so ausgerichtet ist, daß eine am Kopf angebrachte Flasche durch die Wirkung der Schwerkraft in Berührung mit ihr verschwenkt wird, einer Vorrichtung (33, 37) im Gehäuse zum Aufnehmen eines Gaszylinders, der seinerseits mit einem Druckventil (45) versehen ist, einer Vorrichtung (51, 52) zum Betätigen des Druckventils, Leitungen (20, 30), die das Druckventil über den Druckeinlaßkopf mit dem Inneren der Flasche verbinden, um auf diese Weise die in der Flasche enthaltene Flüssigkeit dann mit Kohlensäure oder Luft zu versetzen, wenn das Druckventil betätigt wird, einer Gasablaßvorrichtung (63), die zum Ablassen des Druckes aus der Flasche und den mit ihr in Verbindung stehenden Teilen der Vorrichtung dann betätigt werden kann, wenn die Einleitung der Luft oder der Kohlensäure beendet ist und mit Ventilen (65, 66), die zum Ablassen des Druckes betätigt werden können und zum Verhindern des Aufbaus eines Druckes dann, wenn die am Druckeinlaßkopf angebrachte Flasche sich nicht in einer vorbestimmten, korrekten Stellung befindet, die einer korrekten Form und den korrekten Abmessungen der Flasche entspricht.

14. Vorrichtung nach Anspruch 13, mit Kurveneinrichtungen (69, 77) die am Gehäuse der Vorrichtung ausgebildet sind und die mit Plungern (64, 75) in Eingriff sind, die dann, wenn sie betätigt werden, das Öffnen wenigstens eines Ventiles veranlassen, um den Aufbau von Druck zu verhindern oder den Druck dann abzulassen, wenn die am Druckkopf angebrachte Flasche sich nicht in der korrekten Stellung befindet.

15. Vorrichtung nach Anspruch 13, mit einer Vorrichtung (56) zum Verhindern der Betätigung des am Zylinder angebrachten Druckventiles dann, wenn die Flasche, die am Druckkopf angebracht ist, sich nicht in der korrekten Stellung befindet.

16. Vorrichtung nach Anspruch 15, wobei die Betätigungs-Verhinderungsvorrichtung beim Betrieb des Sicherheitsventils die Betätigungsvorrichtung des Druckventils nicht behindert.

## Revendications

1. Appareil pour gazéifier des liquides contenues dans des bouteilles, comprenant une surface de référence (14) destinée à détecter toute anomalie dans la forme et/ou les dimensions de la bouteille, des moyens (12) pour faire venir une bouteille chargée sur l'appareil dans une relation adaptée avec la surface de référence, et des moyens (69, 64) pour empêcher la montée en pression ou la libération de la pression dans la bouteille si la position de la bouteille, lorsqu'elle est dans une telle relation avec la surface de référence, ne correspond pas ou cesse de correspondre à la position d'une bouteille ayant la forme et les dimensions requises.

2. Appareil selon la revendication 1, caractérisé en ce que la relation adaptée est obtenue par contact direct de la bouteille avec la surface de référence.

3. Appareil selon la revendication 1, comprenant des moyens pour faire venir la bouteille en contact avec la surface de référence, qui comportent des moyens (11) pour recevoir la bouteille dans une relation d'enclenchement décrochable, lesdits moyens pour recevoir une bouteille comportant des moyens (12) pour permettre à la bouteille enclenchée d'être déplacée vers la surface de référence et de venir en butée contre celle-ci par effet de gravité.

4. Appareil selon la revendication 3, caractérisé en ce que les moyens pour permettre à la bouteille enclenchée d'être déplacée vers la surface de référence et de venir en butée contre celle-ci par effet de gravité comportent un accouplement à pivot (12) entre les moyens (11) pour recevoir une bouteille et des moyens de support solidarisés au corps (10) de l'appareil, lesdits moyens (11) pour recevoir étant conçus de telle sorte que le centre de gravité cumulé de la bouteille et des moyens pour recevoir une bouteille, lorsqu'ils sont enclenchés ensemble, est décalé par rapport au centre de l'accouplement à pivot (12), provoquant ainsi, grâce au poids de la bouteille, une poussée de celle-ci vers la surface de référence (14).

5. Appareil selon la revendication 1, comprenant au moins une soupape (65, 66) pour mettre la bouteille, et les parties de l'appareil qui communiquent avec celle-ci lors de l'opération de mise en pression, en communication avec l'atmosphère, lorsque la soupape est ouverte, et des moyens (69, 64) destinés à garder la soupape ouverte quand l'axe de la bouteille n'est pas dans la bonne position.

6. Appareil selon la revendication 5, caractérisé en ce que les moyens pour garder la soupape ouverte comprennent un piston (64) destiné à déplacer l'élément de fermeture de soupape (65) de ses moyens de logement et de came (69) fixés à demeure sur le corps de l'appareil et formés de façon à activer le piston lorsque l'angle de l'axe de la bouteille, et donc les moyens pour recevoir, sont décalés par rapport à leur bonne position respective.

7. Appareil selon la revendication 6, caractérisé en ce que l'angle de déplacement minimum pour actionner le piston (64) par la came (69) est de l'ordre de quelques degrés, et le déplacement correspondant du point de contact du piston avec la came est de l'ordre de quelques millimètres.

8. Appareil selon la revendication 7, caractérisé en ce que ledit angle de déplacement minimum et ledit déplacement correspondant du point de contact du piston avec la came sont plus petits, dans la direction correspondant à un diamètre de bouteille inférieur à la norme, que dans la direction opposée.

9. Appareil selon la revendication 1, comprenant deux soupapes (63) et (72) dont l'une fait office de soupape d'échappement pour libérer la pression, même si la bouteille est dans la bonne position, lorsque la pression a atteint une valeur de seuil et que la gazéification a été terminée, tandis que l'autre fonctionne de manière analogue, à une valeur de seuil plus élevée, pour fournir une sécurité supplémentaire en cas de fonctionnement défectueux de la première.

10. Appareil selon la revendication 9, caractérisé en ce que au moins une des soupapes, et de préférence les deux soupapes, sont également commandées par came pour libérer la pression lorsque la bouteille est déplacée de la bonne position, même si les valeurs de seuil de pression n'ont pas été atteintes.

11. Appareil selon la revendication 10, caractérisé en ce que les cames (69, 77) et d'autres parties de l'appareil sont conçues de telle sorte que la ou les soupapes fonctionneront pour libérer la pression et/ou pour empêcher une montée en pression lorsque l'axe de la bouteille et les moyens pour recevoir sont déplacés dans l'une ou l'autre direction à partir de leur bonne position, grâce auquel les bouteilles trop minces ou ayant des parties de contour excessivement minces ne seront pas mises sous pression non plus.

12. Appareil selon la revendication 5, comprenant, en coopération avec des moyens (52) à commande manuelle pour mettre un cylindre à gaz, qui y est chargé, en communication avec l'intérieur d'une bouteille, qui s'y trouve chargée également, des moyens (56) pour empêcher lesdits moyens à commande manuelle d'être actionnés si l'axe de la bouteille et les moyens pour recevoir une bouteille sont déplacés de la bonne position d'une distance insuffisante pour permettre de décharger la bouteille de l'appareil, mais supérieure à la distance nécessaire pour activer les soupapes de décompression pour qu'elles libèrent la pression.

13. Appareil selon la revendication 1, comprenant un corps (10), une tête de gazéification (11) disposant de moyens pour y fixer, dans une relation d'étanchéité aux gaz, une bouteille contenant un liquide à gazéifier, et pivotée, par rapport au corps, autour d'un point (12) verticalement décalé par rapport au centre de gravité cumulé de ladite tête et d'une bouteille remplie qui y est fixée, une surface de référence (14) fixée au corps et positionnée de telle sorte qu'une bouteille fixée à ladite tête basculera pour venir en contact avec la surface de référence par effet de gravité, des moyens (33, 37) dans ledit corps pour recevoir un cylindre à gaz muni de moyens de soupape de gazéification (45), des moyens (51, 52) pour actionner les moyens de soupape de gazéification, des moyens de canalisation (20, 30) reliant les moyens de soupape de gazéification avec l'intérieur de la bouteille par l'intermédiaire de la tête de gazéification, pour gazéifier le liquide contenu dans celle-ci lorsque les moyens de soupape de gazéification sont commandés, lorsque les moyens d'échappement de gaz (63) fonctionnent pour libérer la pression de la bouteille et des parties de communication de l'appareil, et lorsque les moyens de soupape (65, 66) fonctionnent pour libérer la pression et pour empêcher la formation de pression quand la bouteille fixée à la tête de gazéification ne se trouve pas dans la bonne position prédéterminée correspondant à une forme et à des dimensions acceptables de la bouteille.

14. L'appareil selon la revendication 13, comprenant des moyens de came (69, 77) définis sur le corps de l'appareil et qui actionnent des pistons (64, 75) qui permettent de provoquer l'ouverture d'au moins un jeu de moyens de soupape pour libérer ou pour empêcher la formation de pression lorsque la bouteille fixée à la tête de gazéification n'est pas dans la bonne position.

15. Appareil selon la revendication 13, comprenant des moyens (56) pour empêcher la commande de la soupape de gazéification appliquée au cylindre lorsque la bouteille fixée à la tête de gazéification n'est pas dans la bonne position.

16. Appareil selon la revendication 15, caractérisé en ce que les moyens pour empêcher la commande n'occasionnent pas de gêne entre les moyens de commande de la soupape de gazéification et le fonctionnement de la soupape de sûreté.
